# EUROPEAN PATENT APPLICATION

(11) **EP 4 782 976 A1**
(43) Date of publication of application: **29.07.2026**
(21) Application number: 24867177.8
(22) Date of filing: 14.08.2024
(51) Int. Cl.: G06F 3/0482

(54) **DESKTOP WIDGET PROCESSING METHOD, APPARATUS AND DEVICE, AND STORAGE MEDIUM**

(30) Priority: 22.09.2023 CN 202311238528
(71) Applicant: Beijing Zitiao Network Technology Co., Ltd., Beijing 100190 (CN)
(72) Inventor: REN, Siyuan, Beijing 100028 (CN); DAI, Bian, Beijing 100028 (CN); LIN, Shengwei, Beijing 100028 (CN); GAO, Ding, Beijing 100028 (CN); ZHANG, Zhenfeng, Beijing 100028 (CN); GUAN, Sainan, Beijing 100028 (CN); LIU, Wenwen, Beijing 100028 (CN)
(74) Representative: Isarpatent
(86) International application number: PCT/CN2024/112026
(87) International publication number: WO 2025/060760

(57) **Abstract**

Provided in the present disclosure are a desktop widget processing method, apparatus and device, and a storage medium. The method comprises: displaying a desktop widget of a target application; in response to a trigger operation on the desktop widget, displaying a desktop widget function list corresponding to the target application; and in response to an addition operation on a first target desktop widget function among at least one desktop widget function, adding and displaying the first target desktop widget function to the desktop widget. In the embodiments of the present disclosure, the desktop widget is used to aggregate a plurality of desktop widget functions, and on the basis of the desktop widget, the adding and displaying of any desktop widget function to the desktop widget can be triggered.

## Description

### CROSS-REFERENCE TO RELATED APPLICATION(S)

This application claims the benefit of the Chinese Patent Application No. 202311238528.8 filed on September 22, 2023. The entire teachings of the above-mentioned application are incorporated herein by reference.

### FIELD

The present disclosure relates to the field of data processing, and in particular to a desktop widget processing method, apparatus, and device, and a storage medium.

### BACKGROUND

With the continuous development of computer technology, the number of applications installed on computer devices is increasing. For example, various types of applications such as browsers, social apps, and e-commerce apps may be installed on computer devices.

In order to meet people's requirements for convenient operation of applications installed on computer devices, desktop widget functions such as a weather forecast widget have emerged, allowing users to directly view weather conditions of a specific area on the desktop.

However, the interaction methods supported by the current desktop widget-related functions are relatively limited, failing to meet diversified interaction requirements of users for the desktop widget-related functions.

### SUMMARY

To solve the above-mentioned technical problem, embodiments of the present disclosure provide a desktop widget processing method.

According to a first aspect, the present disclosure provides a desktop widget processing method. The method includes:
displaying a desktop widget of a target application;
displaying a desktop widget function list corresponding to the target application in response to a trigger operation on the desktop widget, where the desktop widget function list includes at least one desktop widget function, the desktop widget function having a correspondence with an interactive function of the target application; and
adding and displaying, in response to an addition operation on a first target desktop widget function among the at least one desktop widget function, the first target desktop widget function on the desktop widget, where the first target desktop widget function is used to trigger the interactive function of the target application corresponding to the first target desktop widget function.

In an optional implementation, the method further includes:
removing, in response to a removal operation on a second target desktop widget function among the at least one desktop widget function, the second target desktop widget function from the desktop widget.

In an optional implementation, the at least one desktop widget function includes a quick search function, and adding and displaying, in response to the addition operation on the first target desktop widget function among the at least one desktop widget function, the target desktop widget function on the desktop widget includes:
adding and displaying, in response to an addition operation on the quick search function among the at least one desktop widget function, the quick search function on the desktop widget, where the quick search function carries a preset search box.

In an optional implementation, the method further includes:
presenting a candidate term list in response to a trigger operation on the preset search box carried by the quick search function, where the candidate term list includes suggested search terms and/or trending search terms, and the candidate term list is used to determine a target search term corresponding to the preset search box.

In an optional implementation, the method further includes:
displaying a search result page of the target application in response to a search trigger operation on a target search term within the preset search box carried by the quick search function, where the search result page is configured to present search results corresponding to the target search term.

In an optional implementation, the method further includes:
displaying an addition control for a quick search function on a search result page of the target application; and
adding and displaying the quick search function on the desktop widget in response to a trigger operation on the addition control.

In an optional implementation, the method further includes:
displaying a desktop right-click function panel, where the desktop right-click function panel presents at least one desktop widget function;
adding and displaying, in response to an addition operation on a third target desktop widget function on the desktop right-click function panel, the third target desktop widget function on the desktop widget;
or removing, in response to a removal operation on a fourth target desktop widget function on the desktop right-click function panel, the fourth target desktop widget function from the desktop widget.

In an optional implementation, the at least one desktop widget function includes a widget setting function, and the method further includes:
displaying a widget setting page of the target application in response to a preset trigger operation on the widget setting function;
removing, in response to a removal operation on a fifth target desktop widget function that acts on the widget setting page, the fifth target desktop widget function from the desktop widget;
or adding and displaying, in response to an addition operation on a sixth target desktop widget function that acts on the widget setting page, the sixth target desktop widget function on the desktop widget.

In an optional implementation, the method further includes:
adding, in response to a function addition operation on a seventh target desktop widget function that acts on the widget setting page, the seventh target desktop widget function to the desktop widget function list;
or removing, in response to a function removal operation on an eighth target desktop widget function that acts on the widget setting page, the eighth target desktop widget function from the desktop widget function list.

In an optional implementation, the method further includes:
obtaining, in response to an adjustment operation on a desktop widget function presentation order that acts on the widget setting page, the adjusted desktop widget function presentation order; and
updating a presentation order of each desktop widget function in the desktop widget function list based on the adjusted desktop widget function presentation order.

In an optional implementation, the at least one desktop widget function includes a livestream reminder widget function, and the method further includes:
displaying a livestream reminder interface corresponding to the target application in response to a trigger operation on the livestream reminder widget function displayed on the desktop widget, where the livestream reminder interface displays livestream reminder information.

In an optional implementation, the at least one desktop widget function includes a private message widget function, and the method further includes:
displaying a private message interface in response to a trigger operation on the private message widget function displayed on the desktop widget, where the private message interface is configured to receive and send private messages.

In an optional implementation, the private message widget function carries at least one user avatar, and the method further includes:
displaying, in response to a trigger operation on a target user avatar among the at least one user avatar, a private message interface of a target user corresponding to the target user avatar, where the private message interface of the target user is configured to receive and send private messages for the target user.

In an optional implementation, the at least one desktop widget function includes a recommended object widget function, and the method further includes:
displaying a recommended object list in response to a trigger operation on the recommended object widget function displayed on the desktop widget, where the recommended object list is used to trigger a preset interaction operation on a target recommended object.

In an optional implementation, after displaying the first target desktop widget function on the desktop widget, the method further includes:
displaying a widget drag control in response to a preset trigger operation acting within a preset display area corresponding to the desktop widget; and
in response to a drag operation on the widget drag control, controlling the desktop widget to move along a drag trajectory of the drag operation, and presenting the desktop widget at a target position corresponding to the drag operation.

According to a second aspect, the present disclosure provides a desktop widget processing apparatus. The apparatus includes:
a first display module configured to display a desktop widget of a target application;
a second display module configured to display a desktop widget function list corresponding to the target application in response to a trigger operation on the desktop widget, where the desktop widget function list includes at least one desktop widget function, the desktop widget function having a correspondence with an interactive function of the target application; and
a third display module configured to add and display, in response to an addition operation on a first target desktop widget function among the at least one desktop widget function, the first target desktop widget function on the desktop widget, where the first target desktop widget function is used to trigger the interactive function of the target application corresponding to the first target desktop widget function.

According to a third aspect, the present disclosure provides a computer-readable storage medium, where the computer-readable storage medium stores instructions therein, and the instructions, when executed on a terminal device, cause the terminal device to implement the method described above.

According to a fourth aspect, the present disclosure provides a desktop widget processing device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program/instructions. The computer program/instructions, when executed by a processor, cause the method described above to be implemented.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a desktop widget processing method according to an embodiment of the present disclosure;
FIG. 2 is a schematic diagram of a desktop of a terminal device according to an embodiment of the present disclosure;
FIG. 3 is a schematic diagram of a quick search function displayed on a desktop widget according to an embodiment of the present disclosure;
FIG. 4 is a schematic diagram of a quick search function displayed on another desktop widget according to an embodiment of the present disclosure;
FIG. 5 is a schematic diagram of a search result page according to an embodiment of the present disclosure;
FIG. 6 is a schematic diagram of a right-click function panel according to an embodiment of the present disclosure;
FIG. 7 is a schematic structural diagram of a desktop widget processing apparatus according to an embodiment of the present disclosure; and
FIG. 8 is a schematic structural diagram of a desktop widget processing device according to an embodiment of the present disclosure.

### DETAILED DESCRIPTION OF EMBODIMENTS

For a clearer understanding of the above objectives, features and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of computer technology, the number of applications installed on computer devices is increasing. For example, various types of applications such as browsers, social apps, and e-commerce apps may be installed on computer devices.

In order to meet people's requirements for convenient operation of applications installed on computer devices, desktop widget functions such as a weather forecast widget have emerged, allowing users to directly view weather conditions of a specific area on the desktop.

However, the interaction methods supported by the current desktop widget-related functions are relatively limited, failing to meet diversified interaction requirements of users for the desktop widget-related functions.

For this purpose, the embodiments of the present disclosure provide a desktop widget processing method. First, a desktop widget of a target application is displayed; a desktop widget function list corresponding to the target application is displayed in response to a trigger operation on the desktop widget, where the desktop widget function list includes at least one desktop widget function, the desktop widget function having a correspondence with an interactive function of the target application; and then, in response to an addition operation on a first target desktop widget function among the at least one desktop widget function, the first target desktop widget function is added and displayed on the desktop widget, where the first target desktop widget function is used to trigger the interactive function of the target application corresponding to the first target desktop widget function. In the embodiments of the present disclosure, the desktop widget is used to aggregate a plurality of desktop widget functions, and based on the desktop widget, the addition and display of any desktop widget function on the desktop widget can be triggered. It can be seen that the embodiments of the present disclosure enrich desktop widget-related functions, meet the diversified interaction requirements of users for the desktop widget-related functions, and improve the interaction experience of users.

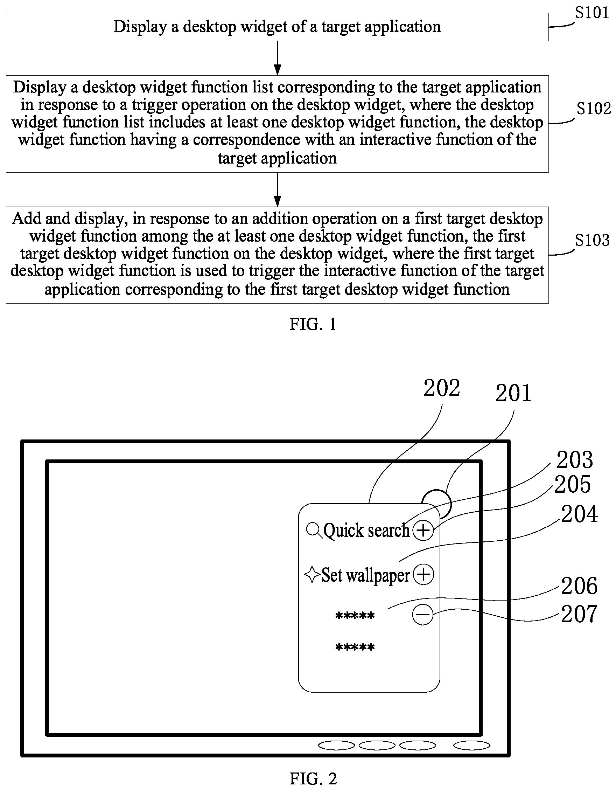

Based on this, an embodiment of the present disclosure provides a desktop widget processing method. FIG. 1 is a flowchart of a desktop widget processing method according to an embodiment of the present disclosure. The method includes the following steps.

S101: A desktop widget of a target application is displayed.

The desktop widget processing method provided in the embodiments of the present disclosure may be applied to various types of terminal devices, such as a desktop computer, a laptop computer, a tablet computer, and a smartphone.

In the embodiments of the present disclosure, a target application is pre-installed on a terminal device, where the target application may be any application installed on the terminal device, and a desktop widget of the target application is displayed on a desktop of the terminal device.

A presentation style of the desktop widget and a presentation position on the desktop of the terminal device are not limited in the present disclosure.

In an optional implementation, during installation of a target application on a terminal device, a desktop widget is generated on a desktop of the terminal device and the desktop widget is displayed on the desktop of the terminal device.

The desktop widget aggregates a plurality of interactive functions in the target application, and the plurality of interactive functions in the target application may be conveniently triggered through the desktop widget. The desktop widget may be displayed on the desktop of the terminal device in the form of a preset animation. The preset animation may be a virtual avatar animation or the like. Specifically, the virtual avatar animation may include a plurality of display states, and different display states may be displayed at different times based on requirements.

S102: In response to a trigger operation on the desktop widget, a desktop widget function list corresponding to the target application is displayed,
where the desktop widget function list includes at least one desktop widget function, the desktop widget function having a correspondence with an interactive function of the target application.

In the embodiments of the present disclosure, the trigger operation on the desktop widget may include an operation on a cursor entering a display area of the desktop widget, such as hovering over the display area of the desktop widget; or the trigger operation may be a preset trigger operation such as a click operation, a double-click operation, or the like on the desktop widget.

Based on the trigger operation on the desktop widget, a state of a preset animation image of the desktop widget changes. Specifically, when the trigger operation on the desktop widget is received, a display state of the preset animation image of the desktop widget changes, and when the trigger operation on the desktop widget ends, the display state of the preset animation image of the desktop widget changes again.

The trigger operation on the desktop widget is used to trigger the display of the desktop widget function list of the target application on the desktop of the terminal device.

In the embodiments of the present disclosure, the desktop widget function is predetermined based on the interactive function of the target application. In other words, there is correspondence between the desktop widget function and at least one interactive function in the target application, and the desktop widget function supports quick interaction of a user with the interactive function of its corresponding target application.

Specifically, the desktop widget functions in the desktop widget function list may include a quick search function, a wallpaper setting function, and the like of the target application.

Specifically, the types of the desktop widget functions in the desktop widget function list are not limited in the embodiments of the present disclosure.

FIG. 2 is a schematic diagram of a desktop of a terminal device according to an embodiment of the present disclosure. When a trigger operation on a desktop widget 201 is received, a desktop widget function list 202 corresponding to the target application is displayed, where the desktop widget function list 202 includes a plurality of desktop widget functions, such as a quick search function 203, a wallpaper setting function 204, and the like.

It should be noted that the desktop widget function list may further include other non-desktop widget functions, such as a widget exit function and a target application access function, and based on the non-desktop widget functions, the user can also quickly complete an interaction operation with the target application.

S103: In response to an addition operation on a first target desktop widget function among the at least one desktop widget function, the first target desktop widget function is added and displayed on the desktop widget,
where the first target desktop widget function is used to trigger the interactive function of the target application corresponding to the first target desktop widget function.

In the embodiments of the present disclosure, the first target desktop widget function may be any desktop widget function in the desktop widget list that is in a state to be added, such as the quick search function 203 and the wallpaper setting function 204 in the desktop widget function list displayed on the desktop of the terminal device shown in FIG. 2. The state to be added refers to a state in which the corresponding desktop widget function is not added and displayed on the desktop widget.

In the embodiments of the present disclosure, the addition operation on the first target desktop widget function may include a preset interaction operation such as a click operation, a double-click operation, or the like on a display area of the first target desktop widget function, and may further include a trigger operation on a preset addition control corresponding to the first target desktop widget function, to trigger the addition operation on the first target desktop widget function, such as an addition control 205 corresponding to the quick search function 203 in the desktop widget function list displayed on the desktop of the terminal device shown in FIG. 2.

In the embodiments of the present disclosure, when the addition operation on the first target desktop widget function is received, the first target desktop widget function is added and displayed on the desktop widget, where the first target desktop widget function may be used to trigger a quick interaction for the interactive function corresponding to the first target desktop widget function.

In the embodiments of the present disclosure, when the operation of adding the desktop widget function is performed, other desktop widget functions bound to the desktop widget function may also be simultaneously displayed on the desktop widget. For example, assuming that a binding relationship is established between the quick search function and a function of entering a homepage of the target application, when an addition operation on the quick search function is received, the quick search function is added and displayed on the desktop widget, and the function of entering the homepage of the target application is also added and displayed on the desktop widget.

In addition, a presentation style of the desktop widget function may be set based on its corresponding interactive function. For example, if the desktop widget function is the quick search function, a corresponding presentation style of the desktop widget function may be a preset search box; or if the desktop widget function is the wallpaper setting function, a corresponding presentation style of the desktop widget function may be a preset icon, and so on.

In the embodiments of the present disclosure, the addition operation may be supported, enabling the desktop widget function to be added and displayed on the desktop widget. In addition, a removal operation may also be supported, enabling the desktop widget function displayed on the desktop widget to be removed.

In an optional implementation, when a removal operation on a second target desktop widget function among the at least one desktop widget function is received, the second target desktop widget function is removed from the desktop widget.

In the embodiments of the present disclosure, the second target desktop widget function may be any desktop widget function displayed on the desktop widget, and the desktop widget function is in an added state in the desktop widget list, where the desktop widget function in the added state is currently being displayed on the desktop widget.

In the embodiments of the present disclosure, the removal operation on the second target desktop widget function may include a preset interaction operation such as a click operation, a double-click operation, or the like on a display area of the second target desktop widget function, and may further include a trigger operation on a preset removal control corresponding to the second target desktop widget function, to trigger the removal operation on the second target desktop widget function,
such as a second target desktop widget function 206 in the desktop widget function list displayed on the desktop of the terminal device shown in FIG. 2. When a removal control 207 for the second target desktop widget function 206 is received, the second target desktop widget function is removed from the desktop widget. In this case, the desktop widget function is hidden from the desktop widget.

In the desktop widget processing method provided in the embodiments of the present disclosure, the desktop widget of the target application is displayed; the desktop widget function list corresponding to the target application is displayed in response to the trigger operation on the desktop widget, where the desktop widget function list includes at least one desktop widget function, the desktop widget function having a correspondence with the interactive function of the target application; and then, in response to the addition operation on the first target desktop widget function among the at least one desktop widget function, the first target desktop widget function is displayed on the desktop widget, where the first target desktop widget function is used to trigger the interactive function of the target application corresponding to the first target desktop widget function. In the embodiments of the present disclosure, the desktop widget is used to aggregate a plurality of desktop widget functions, and based on the desktop widget, the addition and display of any desktop widget function on the desktop widget can be triggered. It can be seen that the embodiments of the present disclosure enrich desktop widget-related functions, meet the diversified interaction requirements of the user for the desktop widget-related functions, and improve the interaction experience of the user.

In the embodiments of the present disclosure, the desktop widget function list may include various types of desktop widget functions, where the various types of desktop widget functions may include a quick search function, which is convenient for the user to implement quick search.

In an optional implementation, when the addition operation on the quick search function among the at least one desktop widget function is received, the quick search function is added and displayed on the desktop widget. The quick search function carries a preset search box, to provide the user with a search service.

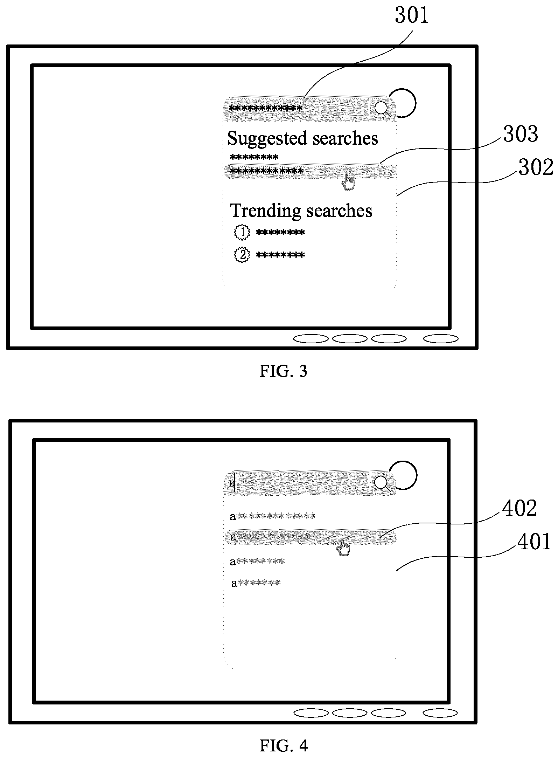

FIG. 3 is a schematic diagram of a quick search function displayed on a desktop widget according to an embodiment of the present disclosure. The desktop widget function carries a preset search box 301, and a search operation may be performed based on a target application by triggering the preset search box 301.

In an optional implementation, when a trigger operation on the preset search box carried by the quick search function is received, a candidate term list is presented, where the candidate term list includes suggested search terms and/or trending search terms, and the candidate term list is used to determine a target search term corresponding to the preset search box.

In the embodiments of the present disclosure, the trigger operation on the preset search box may include a preset interaction operation such as an input operation triggered for the preset search box or a click operation triggered within the preset search box, where the suggested search terms may be associated terms determined based on the user's input term within the preset search box, and the trending search terms may be terms with high popularity data, for example, the popularity data is a number of searches.

In the schematic diagram of the quick search function displayed on the desktop widget shown in FIG. 3, when the trigger operation of the user on the preset search box 301 is received, a search detail panel 302 is displayed, the search detail panel presents the candidate term list, and the candidate term list includes the suggested search terms and the trending search terms. The target search term corresponding to the preset search box may be determined based on the presentation of the candidate term list, as shown in the target search term 303.

In another optional implementation, when the input operation on the preset search box is received, the candidate term list is presented, where the candidate term list includes suggested search terms, and the candidate term list is used to determine a target search term corresponding to the preset search box.

FIG. 4 is a schematic diagram of a quick search function displayed on another desktop widget according to an embodiment of the present disclosure. When the input operation of the user for the preset search box is received, a search detail panel 401 is displayed, the search detail panel presents a candidate term list, where the candidate term list includes suggested search terms. The target search term corresponding to the preset search box may be determined based on the presentation of the candidate term list, as shown in the target search term 403.

After determining the target search term, if a search trigger operation on the target search term within the preset search box is received, a search result page of the target application is displayed, where the search result page is configured to present search results corresponding to the target search term.

In the embodiments of the present disclosure, the quick search function is added and displayed on the desktop widget, implementing the quick search function of the target application, thereby improving the user experience.

In practical applications, the search function can also be implemented by initiating the target application and triggering a search for the target search term in the preset search box on a search page of the target application.

In an optional implementation, if the quick search function is not added and displayed on a current desktop widget, an addition control for the quick search function is displayed on the search result page of the target application. When a trigger operation on the addition control is received, the quick search function is displayed on the desktop widget, so that the quick search function may be used on the desktop widget to view information in the target application.

In an optional implementation, when the presentation of the search result page of the target application is triggered, if it is determined that the quick search function is displayed on the desktop widget, the quick search function is hidden (i.e. not displayed) on the search result page of the target application.

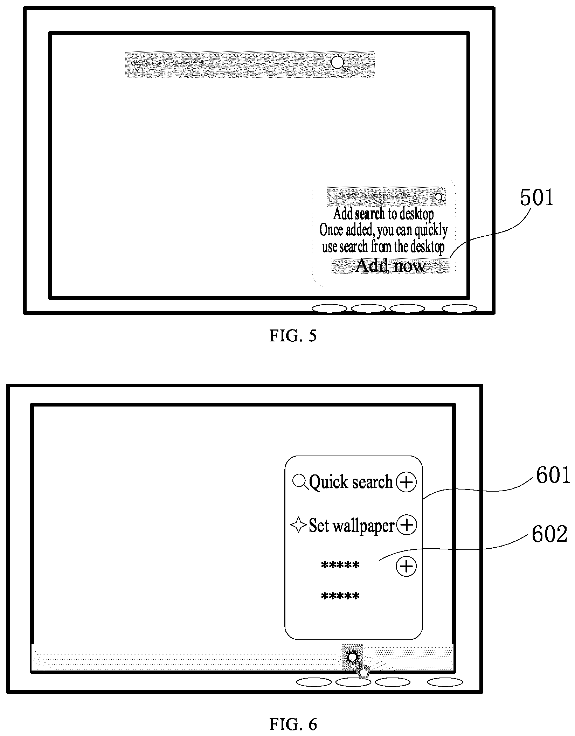

FIG. 5 is a schematic diagram of a search result page according to an embodiment of the present disclosure. An addition control 501 of the quick search function is displayed on the search result page of the target application, and is used to trigger the addition and display of the quick search function on the desktop widget.

In practical applications, when the target application is running, an icon corresponding to the target application is displayed within a desktop taskbar. In the embodiments of the present disclosure, a desktop right-click function panel may also be displayed by triggering the icon corresponding to the target application, thereby implementing the addition operation and the removal operation of the desktop widget function based on the desktop widget function presented on the desktop right-click function panel.

Specifically, the user right-clicks the icon corresponding to the target application, and triggers the display of the desktop right-click function panel, where the desktop right-click function panel presents at least one desktop widget function. The at least one desktop widget function includes a third target desktop widget function, and the third target desktop widget function is in a state to be added. When an addition operation on the third target desktop widget function on the desktop right-click function panel is received, the third target desktop widget function is added and displayed on the desktop widget.

In another optional implementation, at least one desktop widget function includes a fourth target desktop widget function, and the fourth target desktop widget function is in an added state. When a removal operation on the fourth target desktop widget function on the desktop right-click function panel is received, the fourth target desktop widget function is removed from the desktop widget.

FIG. 6 is a schematic diagram of a right-click function panel according to an embodiment of the present disclosure. The icon corresponding to the target application is displayed on a bottom taskbar of the desktop of the terminal device. When the user right-clicks the icon corresponding to the target application, a desktop right-click function panel 601 is displayed, where the desktop right-click function panel presents at least one desktop widget function. When an addition operation of the user for the third target desktop widget function 602 on the desktop right-click function panel is received, the third target desktop widget function is displayed on the desktop widget.

The desktop widget function list in the embodiments of the present disclosure may include various types of desktop widget functions, where the various types of desktop widget functions may further include a widget setting function to implement quick setup of the desktop widget.

A plurality of desktop widget functions are displayed within a first area of a widget setting page, and by triggering the addition or removal operation on the plurality of desktop widget functions, the desktop widget functions may be displayed on the desktop widget or removed from the desktop widget.

In an optional implementation, if a fifth target desktop widget function is displayed on the desktop widget, when a preset trigger operation on the widget setting function is received, a widget setting page of the target application is displayed, where the fifth target desktop widget function is displayed within a first area of the widget setting page, and the fifth target desktop widget function is in an added state. If a removal operation on the fifth target desktop widget function that acts on the widget setting page is received, the fifth target desktop widget function is removed from the desktop widget.

In another optional implementation, if a sixth target desktop widget function is not displayed on the desktop widget, when a preset trigger operation on the widget setting function is received, a widget setting page of the target application is displayed, where the sixth target desktop widget function in a state to be added is displayed within a first area of the widget setting page. If an addition operation on the sixth target desktop widget function that acts on the widget setting page is received, the sixth target desktop widget function is displayed on the desktop widget.

In the embodiments of the present disclosure, based on the widget setting page, corresponding addition or removal operations may be performed on the desktop widget functions on the desktop widget, or based on the widget setting page, corresponding function addition or removal operations may be performed on the desktop widget functions of the desktop widget function list.

The function addition operation and the function removal operation on the desktop widget function may include performing the function addition operation or the function removal operation on the desktop widget function within a second area of the widget setting page, that is, adding the desktop widget function to the desktop function list or removing the desktop widget function from the desktop function list.

The function addition operation on the desktop widget function may include a preset operation such as a click operation, a double click operation, or the like, and may further include a preset function addition control, which is not limited in the embodiments of the present disclosure.

In an optional implementation, if a seventh target desktop widget function is not displayed in the desktop widget function list, when a preset trigger operation on the widget setting function is received, a widget setting page of the target application is displayed, where the seventh target desktop widget function is displayed within a second area of the widget setting page, and the seventh target desktop widget function is in a state of function to be added. When a function addition operation on the seventh target desktop widget function that acts on the widget setting page is received, the seventh target desktop widget function is added to the desktop widget function list, where the state of function to be added indicates that the seventh target desktop widget function is not displayed in the desktop widget function list.

In another optional implementation, if an eighth target desktop widget function is displayed in the desktop widget function list, when a preset trigger operation on the widget setting function is received, a widget setting page of the target application is displayed, where the eighth target desktop widget function is displayed within a second area of the widget setting page, and the eighth target desktop widget function is in a function added state. When a function removal operation on the eighth target desktop widget function that acts on the widget setting page is received, the eighth target desktop widget function is removed from the desktop widget function list, where the function added state indicates that the eighth target desktop widget function is displayed in the desktop widget function list.

On the basis of the above-described embodiments, in the embodiments of the present disclosure, an enable operation and a disable operation on the desktop widget may further be set on the widget setting page, to trigger the desktop widget to be displayed on or hidden from the desktop of the terminal device.

In an optional implementation, if a desktop widget is displayed on the desktop of the terminal device, when a preset trigger operation on the widget setting function is received, a widget setting page of the target application is displayed, the desktop widget on the widget setting page is in an enabled state, and when a disable operation on the desktop widget is received, the desktop widget is hidden from the desktop of the terminal device.

In another optional implementation, if a desktop widget is not displayed on the desktop of the terminal device, when a preset trigger operation on the widget setting function is received, a widget setting page of the target application is displayed. In this case, the desktop widget on the widget setting page is in a disabled state. When an enable operation on the desktop widget is received, the desktop widget is displayed on the desktop of the terminal device.

In the embodiments of the present disclosure, based on the widget setting page, the addition operation or the removal operation on the desktop widget function is performed, and the enable operation and the disable operation on the desktop widget are performed, which further meets the user's requirements and improves the user experience.

In addition, in the embodiments of the present disclosure, a desktop widget function presentation order in the desktop widget function list is further adjusted based on the widget setting page.

In an optional implementation, when an adjustment operation on the desktop widget function presentation order that acts on the widget setting page is received, the adjusted desktop widget function presentation order is obtained; and the presentation order of each desktop widget function in the desktop widget function list is updated based on the adjusted desktop widget function presentation order.

In the embodiments of the present disclosure, by supporting the adjustment of the presentation order of the plurality of desktop widget functions in the desktop widget function list, the user can adjust the presentation order of the desktop widget functions in the desktop widget function list based on their needs, which meets the user's requirements and improves the user experience.

In the embodiments of the present disclosure, the desktop widget function presented in the desktop widget function list may further include a livestream reminder widget function for livestream reminder.

In an optional implementation, when a trigger operation on the livestream reminder widget function displayed on the desktop widget is received, a livestream reminder interface corresponding to the target application is displayed, where the livestream reminder interface displays livestream reminder information.

In the embodiments of the present disclosure, the desktop widget function presented in the desktop widget function list may further include a private message widget function for receiving and sending a private message.

In an optional implementation, when a trigger operation on the private message widget function displayed on the desktop widget is received, a private message interface is displayed, where the private message interface is configured to receive and send a private message.

The private message widget function may carry at least one user avatar.

In an optional implementation, when a trigger operation on a target user avatar among the at least one user avatar is received, a private message interface of a target user corresponding to the target user avatar is displayed, where the private message interface of the target user is configured to receive and send private messages for the target user.

In the embodiments of the present disclosure, the desktop widget function presented in the desktop widget function list may further include a recommended object widget function.

In an optional implementation, when a trigger operation on the recommended object widget function displayed on the desktop widget is received, a recommended object list is displayed, where the recommended object list is used to trigger a preset interaction operation on a target recommended object.

The preset interaction operation may be a click operation, a double-click operation, or the like, which is not limited in the embodiments of the present disclosure.

In the embodiments of the present disclosure, in the process of displaying the desktop widget function on the desktop widget, a drag operation on the desktop widget is also supported.

Specifically, when a preset trigger operation acting within a preset display area corresponding to the desktop widget is received, a widget drag control is displayed, and when a drag operation on the widget drag control is received, the desktop widget is controlled to move along a drag trajectory of the drag operation, and the desktop widget is presented at a target position corresponding to the drag operation.

In the embodiments of the present disclosure, by supporting the user to drag the desktop widget, the user can select a suitable position to place the desktop widget, which meets the user's requirements and improves the user experience.

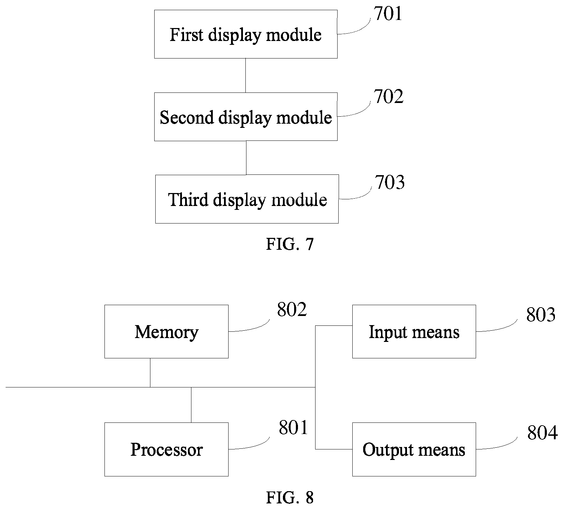

Based on the above-mentioned method embodiments, the present disclosure further provides a desktop widget processing apparatus. FIG. 7 is a schematic structural diagram of a desktop widget processing apparatus according to an embodiment of the present disclosure. The apparatus includes:
a first display module 701 configured to display a desktop widget of a target application;
a second display module 702 configured to display a desktop widget function list corresponding to the target application in response to a trigger operation on the desktop widget, where the desktop widget function list includes at least one desktop widget function, the desktop widget function having a correspondence with an interactive function of the target application; and
a third display module 703 configured to add and display, in response to an addition operation on a first target desktop widget function among the at least one desktop widget function, the first target desktop widget function on the desktop widget, where the first target desktop widget function is used to trigger the interactive function of the target application corresponding to the first target desktop widget function.

In an optional implementation, the apparatus further includes:
a first removal module configured to remove, in response to a removal operation on a second target desktop widget function among the at least one desktop widget function, the second target desktop widget function from the desktop widget.

In an optional implementation, the at least one desktop widget function includes a quick search function, and the third display module is specifically configured to:
add and display the quick search function on the desktop widget in response to an addition operation on the quick search function among the at least one desktop widget function, where the quick search function carries a preset search box.

In an optional implementation, the apparatus further includes:
a presentation module configured to present a candidate term list in response to a trigger operation on the preset search box carried by the quick search function, where the candidate term list includes suggested search terms and/or trending search terms, and the candidate term list is used to determine a target search term corresponding to the preset search box.

In an optional implementation, the apparatus further includes:
a fourth display module configured to display a search result page of the target application in response to a search trigger operation on a target search term within the preset search box carried by the quick search function, where the search result page is configured to present search results corresponding to the target search term.

In an optional implementation, the apparatus further includes:
a fifth display module configured to display an addition control for a quick search function on a search result page of the target application; and
a sixth display module configured to add and display the quick search function on the desktop widget in response to a trigger operation on the addition control.

In an optional implementation, the apparatus further includes:
a seventh display module configured to display a desktop right-click function panel, where the desktop right-click function panel presents at least one desktop widget function;
an eighth display module configured to add and display, in response to an addition operation on a third target desktop widget function on the desktop right-click function panel, the third target desktop widget function on the desktop widget; and
a second removal module configured to remove, in response to a removal operation on a fourth target desktop widget function on the desktop right-click function panel, the fourth target desktop widget function from the desktop widget.

In an optional implementation, the at least one desktop widget function includes a widget setting function, and the apparatus further includes:
a ninth display module configured to display a widget setting page of the target application in response to a preset trigger operation on the widget setting function;
a third removal module configured to remove, in response to a removal operation on a fifth target desktop widget function that acts on the widget setting page, the fifth target desktop widget function from the desktop widget; and
a tenth display module configured to add and display, in response to an addition operation on a sixth target desktop widget function that acts on the widget setting page, the sixth target desktop widget function on the desktop widget.

In an optional implementation, the apparatus further includes:
a first addition module configured to add, in response to a function addition operation on a seventh target desktop widget function that acts on the widget setting page, the seventh target desktop widget function to the desktop widget function list; and
a fourth removal module configured to remove, in response to a function removal operation on an eighth target desktop widget function that acts on the widget setting page, the eighth target desktop widget function from the desktop widget function list.

In an optional implementation, the apparatus further includes:
an obtaining module configured to obtain, in response to an adjustment operation on a desktop widget function presentation order that acts on the widget setting page, the adjusted desktop widget function presentation order; and
an update module configured to update a presentation order of each desktop widget function in the desktop widget function list based on the adjusted presentation order of the desktop widget functions.

In an optional implementation, the at least one desktop widget function includes a livestream reminder widget function, and the apparatus further includes:
an eleventh display module configured to display a livestream reminder interface corresponding to the target application in response to a trigger operation on the livestream reminder widget function displayed on the desktop widget, where the livestream reminder interface displays livestream reminder information.

In an optional implementation, the at least one desktop widget function includes a private message widget function, and the apparatus further includes:
a twelfth display module configured to display a private message interface in response to a trigger operation on the private message widget function displayed on the desktop widget, where the private message interface is configured to receive and send private messages.

In an optional implementation, the private message widget function carries at least one user avatar, and the apparatus further includes:
a thirteenth display module configured to display, in response to a trigger operation on a target user avatar among the at least one user avatar, a private message interface of a target user corresponding to the target user avatar, where the private message interface of the target user is configured to receive and send private messages for the target user.

In an optional implementation, the at least one desktop widget function includes a recommended object widget function, and the apparatus further includes:
a fourteenth display module configured to display a recommended object list on the desktop widget in response to a trigger operation on the recommended object widget function displayed on the desktop widget, where the recommended object list is used to trigger a preset interaction operation on a target recommended object.

In an optional implementation, the apparatus further includes:
a fifteenth display module configured to display a widget drag control in response to a preset trigger operation acting within a preset display area corresponding to the desktop widget; and
a control module configured to: in response to a drag operation on the widget drag control, control the desktop widget to move along a drag trajectory of the drag operation, and present the desktop widget at a target position corresponding to the drag operation.

In the desktop widget processing apparatus provided in the embodiments of the present disclosure, first, the desktop widget of the target application is displayed; in response to the trigger operation on the desktop widget, the desktop widget function list corresponding to the target application is displayed, where the desktop widget function list includes at least one desktop widget function, the desktop widget function having a correspondence with the interactive function of the target application; and then, in response to the addition operation on the first target desktop widget function among the at least one desktop widget function, the first target desktop widget function is added to and displayed on the desktop widget, where the first target desktop widget function is used to trigger the interactive function of the target application corresponding to the first target desktop widget function. In the embodiments of the present disclosure, the desktop widget is used to aggregate a plurality of desktop widget functions, and based on the desktop widget, the display of any desktop widget function on the desktop widget can be triggered. It can be seen that the embodiments of the present disclosure enrich desktop widget-related functions, meet the diversified interaction requirements of the user for the desktop widget-related functions, and improve the interaction experience of the user.

In addition to the method and apparatus described above, an embodiment of the present disclosure further provides a computer-readable storage medium having instructions stored therein. The instructions, when executed on a terminal device, cause the terminal device to implement the desktop widget processing method described in the embodiments of the present disclosure.

An embodiment of the present disclosure further provides a computer program product. The computer program product includes a computer program or instructions. The computer program or instructions, when executed by a processor, cause the desktop widget processing method described in the embodiments of the present disclosure to be implemented.

In addition, an embodiment of the present disclosure further provides a desktop widget processing device. As shown in FIG. 8, the device may include:
a processor 801, a memory 802, an input means 803, and an output means 804. There may be one or more processors 801 in the desktop widget processing device. For example, there is one processor in FIG. 8. In some embodiments of the present disclosure, the processor 801, the memory 802, the input means 803, and the output means 804 may be connected through a bus or in another manner, for example, are connected through the bus in FIG. 8.

The memory 802 may be configured to store a software program and a module. The processor 801 performs various functional applications of the desktop widget processing device and processes data by executing the software program and the module stored in the memory 802. The memory 802 may mainly include a program storage area and a data storage area. The program storage area may store an operating system, an application required by at least one function, and the like. In addition, the memory 802 may include a high-speed random-access memory, and may further include a non-volatile memory, such as at least one magnetic disk storage device, a flash memory device, or other volatile solid-state storage devices. The input means 803 may be configured to receive entered numerical or character information, and generate a signal input related to a user setting and function control of the desktop widget processing device.

Specifically, in this embodiment, the processor 801 loads an executable file corresponding to a process of one or more applications into the memory 802 in accordance with the following instructions, and the processor 801 executes the application stored in the memory 802, to implement various functions of the desktop widget processing device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A desktop widget processing method, comprising:
displaying a desktop widget of a target application;
displaying a desktop widget function list corresponding to the target application in response to a trigger operation on the desktop widget, wherein the desktop widget function list comprises at least one desktop widget function, the desktop widget function having a correspondence with an interactive function of the target application; and
adding and displaying, in response to an addition operation on a first target desktop widget function among the at least one desktop widget function, the first target desktop widget function on the desktop widget, wherein the first target desktop widget function is used to trigger an interactive function of the target application corresponding to the first target desktop widget function.

2. The method according to claim 1, further comprising:
removing, in response to a removal operation on a second target desktop widget function among the at least one desktop widget function, the second target desktop widget function from the desktop widget.

3. The method according to claim 1, wherein the at least one desktop widget function comprises a quick search function, and adding and displaying, in response to the addition operation on the first target desktop widget function among the at least one desktop widget function, the first target desktop widget function on the desktop widget comprises:
adding and displaying the quick search function on the desktop widget in response to an addition operation on the quick search function among the at least one desktop widget function, wherein the quick search function carries a preset search box.

4. The method according to claim 3, further comprising:
presenting a candidate term list in response to a trigger operation on the preset search box carried by the quick search function, wherein the candidate term list comprises suggested search terms and/or trending search terms, and the candidate term list is used to determine a target search term corresponding to the preset search box.

5. The method according to claim 3 or 4, further comprising:
displaying a search result page of the target application in response to a search trigger operation on a target search term within the preset search box carried by the quick search function, wherein the search result page is configured to present search results corresponding to the target search term.

6. The method according to claim 1, further comprising:
displaying an addition control for a quick search function on a search result page of the target application; and
adding and displaying the quick search function on the desktop widget in response to a trigger operation on the addition control.

7. The method according to claim 1, further comprising:
displaying a desktop right-click function panel, wherein the desktop right-click function panel presents at least one desktop widget function;
adding and displaying, in response to an addition operation on a third target desktop widget function on the desktop right-click function panel, the third target desktop widget function on the desktop widget; or
removing, in response to a removal operation on a fourth target desktop widget function on the desktop right-click function panel, the fourth target desktop widget function from the desktop widget.

8. The method according to claim 1, wherein the at least one desktop widget function comprises a widget setting function, and the method further comprises:
displaying a widget setting page of the target application in response to a preset trigger operation on the widget setting function;
removing, in response to a removal operation on a fifth target desktop widget function that acts on the widget setting page, the fifth target desktop widget function from the desktop widget; or
adding and displaying, in response to an addition operation on a sixth target desktop widget function that acts on the widget setting page, the sixth target desktop widget function on the desktop widget.

9. The method according to claim 8, further comprising:
adding, in response to a function addition operation on a seventh target desktop widget function that acts on the widget setting page, the seventh target desktop widget function to the desktop widget function list; or
removing, in response to a function removal operation on an eighth target desktop widget function that acts on the widget setting page, the eighth target desktop widget function from the desktop widget function list.

10. The method according to claim 8, further comprising:
obtaining, in response to an adjustment operation on a desktop widget function presentation order that acts on the widget setting page, an adjusted desktop widget function presentation order; and
updating a presentation order of each desktop widget function in the desktop widget function list based on the adjusted desktop widget function presentation order.

11. The method according to claim 1, wherein the at least one desktop widget function comprises a livestream reminder widget function, and the method further comprises:
displaying a livestream reminder interface corresponding to the target application in response to a trigger operation on the livestream reminder widget function displayed on the desktop widget, wherein the livestream reminder interface displays livestream reminder information.

12. The method according to claim 1, wherein the at least one desktop widget function comprises a private message widget function, and the method further comprises:
displaying a private message interface in response to a trigger operation on the private message widget function displayed on the desktop widget, wherein the private message interface is configured to receive and send private messages.

13. The method according to claim 12, wherein the private message widget function carries at least one user avatar, and the method further comprises:
displaying, in response to a trigger operation on a target user avatar among the at least one user avatar, a private message interface of a target user corresponding to the target user avatar, wherein the private message interface of the target user is configured to receive and send private messages for the target user.

14. The method according to claim 1, wherein the at least one desktop widget function comprises a recommended object widget function, and the method further comprises:
displaying a recommended object list in response to a trigger operation on the recommended object widget function displayed on the desktop widget, wherein the recommended object list is used to trigger a preset interaction operation on a target recommended object.

15. The method according to claim 1, wherein after displaying the first target desktop widget function on the desktop widget, the method further comprises:
displaying a widget drag control in response to a preset trigger operation acting within a preset display area corresponding to the desktop widget; and
controlling, in response to a drag operation on the widget drag control, the desktop widget to move along a drag trajectory of the drag operation, and presenting the desktop widget at a target position corresponding to the drag operation.

16. A desktop widget processing apparatus, comprising:
a first display module configured to display a desktop widget of a target application;
a second display module configured to display a desktop widget function list corresponding to the target application in response to a trigger operation on the desktop widget, wherein the desktop widget function list comprises at least one desktop widget function, the desktop widget function having a correspondence with an interactive function of the target application; and
a third display module configured to add and display, in response to an addition operation on a first target desktop widget function among the at least one desktop widget function, the first target desktop widget function on the desktop widget, wherein the first target desktop widget function is used to trigger an interactive function of the target application corresponding to the first target desktop widget function.

17. A computer-readable storage medium having instructions stored therein, wherein the instructions, when executed on a terminal device, cause the terminal device to implement the method according to any of claims 1 to 15.

18. A desktop widget processing device, comprising:
a memory;
a processor; and
a computer program that is stored on the memory and executable on the processor, wherein the processor, when executing the computer program, implements the method according to any of claims 1 to 15.
